# EUROPÄISCHE PATENTSCHRIFT

(11) **EP 1 825 423 B1**
(45) Veröffentlichungstag und Bekanntmachung des Hinweises auf die Patenterteilung: **26.01.2011**
(21) Anmeldenummer: 05850140.4
(22) Anmeldetag: 06.12.2005
(51) Int. Cl.: G06K 19/077

(54) **ELEKTRONIKBAUTEIL MIT MODULATOR**
ELECTRONIC COMPONENT COMPRISING A MODULATOR
COMPOSANT ELECTRONIQUE COMPRENANT UN MODULATEUR

(30) Priorität: 10.12.2004 DE 102004059464
(43) Veröffentlichungstag der Anmeldung: 29.08.2007
(73) Patentinhaber: PolyIC GmbH & Co. KG, 90763 Fürth (DE)
(72) Erfinder: BÖHM, Markus, 91080 Uttenreuth (DE); FIX, Walter, 90427 Nürnberg (DE); ULLMANN, Andreas, 90513 Zirndorf (DE)
(74) Vertreter: Zinsinger, Norbert
(86) Internationale Anmeldenummer: PCT/DE2005/002196
(87) Internationale Veröffentlichungsnummer: WO 2006/061001

(56) Entgegenhaltungen:
- EP-A- 1 134 694
- EP-A- 1 296 280
- WO-A-01/69517
- WO-A-03/038897
- DE-T2- 69 913 745
- FR-A- 2 853 479
- BAUDE P F ET AL: "Organic semiconductor RFID transponders" INTERNATIONAL ELECTRON DEVICES MEETING 2003. IEDM. TECHNICAL DIGEST. WASHINGTON, DC, DEC 8 - 10, 2003, NEW YORK, NY : IEEE, US, 8. Dezember 2003 (2003-12-08), Seiten 191-194, XP010683989 ISBN: 0-7803-7872-5
- HART C M ET AL: "Low-cost all-polymer integrated circuits" SOLID-STATE CIRCUITS CONFERENCE, 1998. ESSCIRC '98. PROCEEDINGS OF THE 24TH EUROPEAN THE HAGUE, THE NETHERLANDS 22-24 SEPT. 1998, PISCATAWAY, NJ, USA,IEEE, 22. September 1998 (1998-09-22), Seiten 30-34, XP010823411 ISBN: 2-86332-235-4

## Beschreibung

Die Erfindung betrifft ein Elektronikbauteil mit einem Modulator zur Modulation eines Trägersignals.

RFID-Transponder (RFID= Radio Frequency Identification) finden zunehmend Anwendung um Waren, Artikel oder Sicherheitsdokumente mit elektronisch auslesbaren Informationen zu versehen. Sie finden so beispielsweise Anwendung als elektronischer Strichcode für Konsumgüter, als Kofferanhänger zur Identifikation von Gepäck oder als in den Einband eines Reisepasses eingearbeitetes Sicherheitselement, das Authentifizierungsinformationen speichert.

RFID Transponder sind hierbei üblicherweise wie beispielsweise in US 5,528,22 beschrieben aufgebaut.

Der RFID Transponder besteht im wesentlichen aus zwei Komponenten, einer Antenne und einem Siliziumchip. Antenne und Siliziumchip sind auf einem gemeinsamen Trägersubstrat montiert und mittels Kontaktierungen elektrisch miteinander verbunden. Der von einer Basisstation gesendete RF-Träger wird zur Basisstation rückgekoppelt und hierbei dem rückgekoppelten Signal eine zusätzliche Information gemäß eines vorprogrammierten Informationsprotokolls aufmoduliert.

Weiter ist in WO 99/30432 ein RFID Transponder beschrieben, der eine integrierte, im wesentlichen aus organischem Material aufgebaute Schaltung aufweist, die die Funktion eines ID Code Generators erbringt. Der RFID Transponder ist aus elektrischen Bauelementen auf der Basis herkömmlicher Silizium-Technologie, z. B. einer Gleichrichterdiode, und aus organischen Halbleiterbauelementen, dem ID Code Generator IC (IC= Integrated Circuit) aufgebaut.

Weiter ist in DE 101 41 440 C1 ein RFID Transponder beschrieben, der - mit Ausnahme der Antenne - im wesentlichen aus organischen Bauelementen aufgebaut ist.

Das von einer Basisstation abgesendete Trägersignal wird bei diesen RFID-Transpondern in einen Antennenschwingkreis des RFID-Transponders eingekoppelt und sodann die induzierte Spannung gleichgerichtet. Die gleichgerichtete Spannung versorgt einen Logik IC des RFID-Transponders, der einen Modulations-Transistor ansteuert. Der Modulations-Transistor wird von dem Logik IC mit einem eine Bitfolge enthaltenden binären Signal angesteuert, so daß die Dämpfung des Schwingkreises entsprechend dem binären Signal moduliert wird. Das sich hierdurch ändernde Abstrahlverhalten der Antenne wird von der Basisstation detektiert und als Antwortsignal des RFID-Transponders erfaßt.

Der Vorteil eines derartigen RFID Transponders besteht darin, daß Elektronikbauteile, die auf organischer Elektronik (Plastik-Elektronik) basieren, deutlich preisgünstiger hergestellt werden können, so daß RFID Transponder für extrem preisgünstige Anwendungen einsetzbar sind. RFID Transponder können so beispielsweise als elektronische Funketiketten Ersatz für den Barcode bilden.

Allerdings sind organische Schaltkreise wesentlich langsamer als herkömmliche Schaltkreise auf Siliziumbasis. Die Grundbausteine organischer Schaltkreise sind organische Feldeffekt-Transistoren, sog. OFETs. Diese Transistoren basieren auf dem Prinzip der Ladungsträgerakkumulation und nicht auf dem Prinzip der Ladungsträgerinvasion, woraus eine im Vergleich zu Silizium-Transistoren geringe Schaltgeschwindigkeiten und ein unterschiedliches Schaltverhalten (z. B. Wechselspannungsuntauglichkeit) resultiert.

Diese Eigenschaften sprechen gegen den Einsatz derartiger Transistoren in klassischen mehrschrittigen Modulationsverfahren.

In der WO 03/038897 wird ein Elektronikbauteil mit Antenne und Kondensator sowie einem Gleichrichter beschrieben, an dessen Ausgang ein Modulator angeschlossen ist, der von einem OFET gebildet ist.

Weiterhin beschreibt die FR 2 853 379, gegen die die Ansprüche abgegrezt sind, eine induktive gekoppelte Kommunikationseinrichtung, welche eine Antennenspule, einen Kondensator und einen Modulator aufweist. Der Modulator besteht aus drei parallel verschalteten Zweigen, in denen jeweils ein Widerstand und ein Transistor in Serienschaltung angeordnet sind. Die in den drei Zweigen vorgesehenen Widerstände haben unterschiedliche Widerstandswerte, so dass sich die jeweiligen Gesamtwiderstände der Zweige, wenn die jeweiligen Transistoren durchgeschaltet sind, entsprechend dem jeweiligen Widerstandswert des Widerstandes unterscheiden. Durch entsprechende Ansteuerung der Transistoren wird das induzierte Signal somit gemäß dem Widerstandswert des Widerstands in dem jeweiligen Zweig unterschiedlich gedämpft und damit amplituden-moduliert.

Aufgabe der vorliegenden Erfindung ist es nun, eine verbesserte Vorrichtung zur effektiven und sicheren Modulation eines Trägersignals, insbesondere für organische RFID-Transponder, anzugeben.

Erfindungsgemäß wird diese Aufgabe von einem Elektronikbauteil, nach Anspruch 1 gelöst.

Die Erfindung basiert hierbei auf der Erkenntnis, daß mittels zwei oder mehr organischen Feldeffekttransistoren neuartige Modulatoren zur Modulation eines Trägersignals geschaffen werden können, die die besonderen Eigenschaften und das besondere Schaltverhalten von organischen Feldeffekttransistoren für die Modulation des Trägersignals nutzen. Durch die Erfindung ist es möglich, mit äußerst geringem Bauelementaufwand leistungsfähige mehrschrittige Modulationsverfahren zu realisieren und so die übertragbare Informationsmenge zu erhöhen.

Ein organischer Feldeffekttransistor, im Folgenden OFET genannt, weist mindestens drei Elektroden, eine organische Halbleiterschicht und eine Isolierschicht auf. Der OFET ist auf einem Trägersubstrat angeordnet, das als Polymer-Folie ausgebildet sein kann. Ein Substrat aus einem organischen Halbleiter bildet einen leitfähigen Kanal , dessen Endabschnitte durch eine Source-Elektrode und eine Drain-Elektrode gebildet sind. Der leitfähige Kanal ist mit einer Isolationsschicht abgedeckt, auf der eine Gate-Elektrode angeordnet ist. Durch Anlegen einer Gate-Source-Spannung U_{GS} zwischen Gate-Elektrode und Source-Elektrode kann die Leitfähigkeit des leitfähigen Kanals verändert werden. Dieser Effekt beruht bei organischen Halbleitern im wesentlichen auf der sogenannten Löcherleitung, wobei "Löcher" im Kristallgitter, die als Ladungsträger dienen, verdichtet werden, wenn zwischen der Source-Elektrode und der Drain-Elektrode eine Drain-Source-Spannung U_{DS} angelegt wird. Infolgedessen steigt die elektrische Leitfähigkeit zwischen der Drain-Elektrode und der Source-Elektrode, wobei sich im weiteren auch die erzielbaren Sperr- und Durchlaßwiderstände eines OFETs aufgrund des andersartigen Funktionsprinzips eines OFETs deutlich von denen eines in klassischer Silizium-Technologie erstellten Transistor unterscheidet.

Die organische Halbleiterschicht besteht beispielsweise aus konjungierten Polymeren, wie Polythiophenen, Polythienylenvinylenen oder Polyfluorenderivaten, die aus Lösung durch Spin-Coating, Rakeln oder Bedrucken aufgebracht werden. Als organische Halbleiterschicht eignen sich auch sog. "small molecules", d.h. Oligomere wie Sexithiophen oder Pentacen, die durch eine Vakuumtechnik aufgedampft werden.

Es ist vorgesehen, daß die mindestens zwei OFETs eine veränderbare Last zur Modulation des Trägersignals bilden.

Der mittels der Erfindung erzielte Gewinn an übertragbarer Information kann hierbei zur Erhöhung der über die Luftschnittstelle übertragenen Datenrate, für Synchronisationszwecke oder zur Fehlererkennung/ Korrektur genutzt werden - je nach verwendetem Kodierungssystem.

Die erfinderische Schaltungsanordnung kompensiert also den Nachteil der geringen Schaltfrequenz von OFETs durch die gleichzeitig mögliche Übertragung mehrerer Bits und durch die sich auch so eröffnende Möglichkeiten der Parallelverarbeitung in einem mit dem Modulator verbundenen organischen Logik IC.

Wenn nun die Nachteile beim Einsatz von OFETs in RFID-Transpondern beseitigt sind, fallen die Vorteile von OFETs besonders ins Gewicht. Dadurch, daß OFETs kostengünstig und in wenigen Arbeitsschritten durch ein Druckverfahren erzeugt werden können, sind nicht nur die Fertigungskosten sehr niedrig, sondern auch die Entwicklungskosten und die Entwicklungszeit reduziert. Von Vorteil ist auch, daß die OFETs individuell auf ihren Verwendungszweck zugeschnitten werden können.

Der Modulator wird mit mindestens zwei unterschiedlich ausgebildeten OFETs ausgebildet. Es werden so beispielsweise zwei oder mehr OFETs verschaltet, die ein unterschiedliches Schaltverhalten aufweisen. Der speziellen Signalantwort eines jeden dieser OFETs auf die Änderung des Gate-Pegels vom Low - Pegel auf den High - Pegel (und auch umgekehrt) selbst kann so ein Bit im Coderaum zugeordnet werden. Durch Parallelschaltung und/ oder Serienschaltung der unterschiedlichen OFETs wird eine Überlagerung dieser Signalantworten erzielt, so daß sich beim Einsatz von n unterschiedlichen OFETs ein Zeichenvorrat von 2ⁿ unterschiedliche Zeichen erzielen läßt. Besonders vorteilhaft ist es hierbei, wenn die sich unterscheidenden Eigenschaften der OFETs sowie die Verschaltung der OFETs so gewählt sind, daß die sich summarisch überlagernden Signalantworten zueinander orthogonale Funktionen darstellen.

Die Dekodierung der mittels eines derartigen Modulators in das Trägersignal kodierten Information erfordert zwar eine komplexe Auswerteschaltung, die mittels einer organischen Schaltung nur schwer realisiert werden kann. Im Fall eines RFID Transponders erfolgt die Auswertung der Rückantwort des RFID Transponders jedoch durch die Basisstation, in der dann vorzugsweise eine Auswerteschaltung in klassischer Silizium-Technologie zum Einsatz kommt.

Um einen Modulator mit mindestens zwei unterschiedlich ausgebildeten OFETs auszubilden, kann vorgesehen sein, die OFET mit unterschiedlicher Geometrie auszubilden, beispielsweise mit unterschiedlicher Kanallänge und/oder unterschiedlicher Kanalbreite auszubilden.

Diese Parameter können leicht verändert werden und wegen der weiter oben beschriebenen leichten Herstellbarkeit nach der Trial-and-Error Methode in wenigen Schritten optimiert werden.

Es kann auch vorgesehen sein, die OFET mit unterschiedlichen Halbleiterschichten auszubilden, insbesondere die Kanaldicke zu variieren oder ein Halbleitermaterial mit unterschiedlicher Leitfähigkeit oder Dotierung zu verwenden. Auch hier sind Änderungen kurzfristig möglich, weil die Ausgangssubstanzen als Pasten oder Tinten verfügbar sind.

Durch diese beschriebenen Variationen des Aufbaus der OFET können die OFETs mit unterschiedlichem Schaltverhalten und Verlauf des Innenwiderstandes ausgebildet sein.

Besonders vorteilhaft ist es weiter, wenn die mindestens zwei unterschiedlichen OFETs unterschiedliche Innenwiderstände im durchgeschalteten (Durchlaßwiderstand) und/oder im nicht durchgeschalten Zustand (Sperrwiderstand) aufweisen und die OFETs in Parallelschaltung bzw. in Reihenschaltung miteinander verschaltet sind.

Dabei kann vorgesehen sein, daß die OFETs in einer Parallelschaltung die veränderbare Last bilden. Eine Parallelschaltung zweier OFETs mit unterschiedlichen Durchlaßwiderständen kann bereits vier Zustände ausbilden und zwar, wie weiter oben ausführlich dargestellt, durch Änderung des Gesamtwiderstandes der beiden parallelgeschalteten OFETs. Nunmehr kann durch die wahlweise Ansteuerung beider OFETs ein jeweils unterschiedlicher Zustand ausgebildet werden, denn beide OFETs sind nun mit einem unterschiedlichen Durchlaßwiderstand ausgebildet.

Es kann weiter auch vorgesehen sein, daß die beiden oder mehreren OFET mit unterschiedlichen Gatespannungen unterschiedlich ausgesteuert werden, denn der Durchlaßwiderstand des OFET ist von der angelegten Gatespannung abhängig.

Die OFETs sind durch die Änderung der Geometrie und/oder des Halleitermaterials mit unterschiedlichem Schaltverhalten ausgebildet. Es ist so weiter möglich OFETs zu verwenden, die unterschiedliche Flankenformen bei Änderung des Eingangssignals zeigen und deren Flankenformen sich insbesondere in ihrer Flankensteilheit unterscheiden. Für schnelle OFET ist ein fast rechteckförmiger Schaltverlauf charakteristisch, d.h. bei Ansteuerung des OFET schaltet er ohne wesentliche Verzögerung vom Low-Pegel in den High-Pegel und umgekehrt. Langsame OFETs dagegen schalten mit Verzögerung. Das ist gleichbedeutend mit einer geneigten Schaltflanke. Ein langsamer OFET weist deshalb eine stärker geneigte Schaltflanke auf als ein schneller OFET. Durch zwei oder mehr OFET kann auf diese Weise eine Schaltflanke mit wechselnder Neigung und u. U. sich bereichsweise ändernden Schaltflanken ausgebildet werden. Die Information wird so beispielsweise in die Flankensteilheit der Flanken kodiert (Flankensteilheits-Modulation).

Weiter ist es auch möglich, die oben beschriebenen Modulations-Schemata zu kombinieren.

Wie bereits oben beschrieben kann neben einer Parallelschaltung der OFETs auch vorgesehen sein, daß die OFETs in einer Reihenschaltung angeordnet sind. OFETs können bei entsprechendem Design auch im gesperrten Zustand einen endlichen Leitwert aufweisen, so daß die weiter oben für die Parallelschaltung beschriebenen Zustände auch in einer Reihenschaltung von OFET eingenommen werden können.

Gemäß einem bevorzugten Ausführungsbeispiel der Erfindung weist das Elektronikbauteil weiter eine organische binären Logikschaltung auf, wobei die Gates der OFETs mit jeweils zugeordneten Ausgängen der organische Logikschaltung verbunden sind und die OFETs von der binären Logikschaltung zur gleichzeitigen Übertragung von zwei oder mehreren Bits mittels eines mehrstufigen Modulationsverfahren angesteuert werden. Wenn die OFETs von n unterschiedlichen OFETs gebildet sind, so werden die OFETs von der binären Logikschaltung bevorzugt zur gleichzeitigen Übertragung von 2ⁿ Bit angesteuert. Auf diese Weise können beispielsweise mit 3 OFETs gleichzeitig 8 Bit übertragen werden.

Der Modulator kann als ein gedrucktes Dünnschichtelement auf einem Trägersubstrat, insbesondere einer Trägerfolie, ausgebildet sein. Es kann vorgesehen sein, Trägerfolien zu bevorzugen, weil auf diese Weise besonders robuste RFID-Transponder herstellbar sind, die im Gebrauch gefaltet oder geknickt werden können. Ein solcher Herstellungsprozeß kann als kontinuierlicher Rolle-zu-Rolle Prozeß ausgebildet sein.

Es kann aber auch ein starres Substrat vorgesehen sein, beispielsweise ein Glassubstrat.

In weiteren Ausbildungen kann vorgesehen sein, den Modulator optisch durchscheinend und/oder optisch unsichtbar auszubilden. Eine solche Ausbildung kann in Verbindung mit Anzeigeelementen oder optischen Sicherheitselementen besonders vorteilhaft sein.

Es kann vorgesehen sein, daß die zur Lastmodulation des Trägersignals vorgesehenen OFETs einzeln und/oder gemeinsam mit einer gleichen Gatespannung angesteuert werden, die dem High-Pegel der Logikbaugruppe entspricht. Auf diese Weise kann die Logikbaugruppe zur Ansteuerung des Modulators besonders einfach ausgebildet sein.

Es kann auch vorgesehen sein, daß die OFETs zur Modulation des Trägersignals mit unterschiedlichen Gatespannungen angesteuert werden. Beispielsweise ist es so möglich, mehrere, für unterschiedliche Frequenzbänder ausgelegte Antennen auf einem RFID-Transponder anzuordnen, die jeweils mit einem Gleichrichter und einem Kondensator zur Bereitstellung verschiedener Versorgungspotentiale verbunden sind. Die verschiedenen bereitgestellten Versorgungsspannungspotentiale werden zum Betrieb der Logikbaugruppe verwendet. Da bei einem derartigen Elektronikbauteil verschiedene Versorgungsspannungspotentiale zur Verfügung stehen, ist es auf einfache Weise möglich, die zur Modulation des Trägersignals verwendeten OFETs mit unterschiedlichen Gatespannungen anzusteuern.

Das erfindungsgemäße Elektronikbauteil kann beispielsweise Teil eines Sicherheitsdokuments, Tickets oder Warenetikettes sein. Weiter ist es auch möglich, daß ein erfindungsgemäßes Elektronikbauteil nicht die Funktion eines RFID-Transponders, sondern eine beliebige andere Funktion erbringt. So ist es beispielsweise möglich, daß das Elektronikbauteil einen Oszillator umfaßt, der das von dem Modulator modulierte Trägersignal generiert.

Die Erfindung wird nun anhand mehrerer Ausführungsbeispiele unter zur Hilfenahme der beiliegenden Zeichnungen näher erläutert.

Es zeigen
- Fig. 1: ein Blockschaltbild einer Transponderschaltung;
- Fig. 2: ein Prinzipschaltbild einer Transponderschaltung;
- Fig. 3: eine Prinzipdarstellung eines Modulationsdiagramms nach dem Stand der Technik;
- Fig. 4: ein Prinzipschaltbild eines Modulators für ein erstes Ausführungsbeispiel der Erfindung;
- Fig. 5: ein Modulationsdiagramm, insbesondere des Modulators nach Fig. 4;
- Fig. 6: ein Prinzipschaltbild eines Modulators für ein zweites Ausführungsbeispiel der Erfindung.

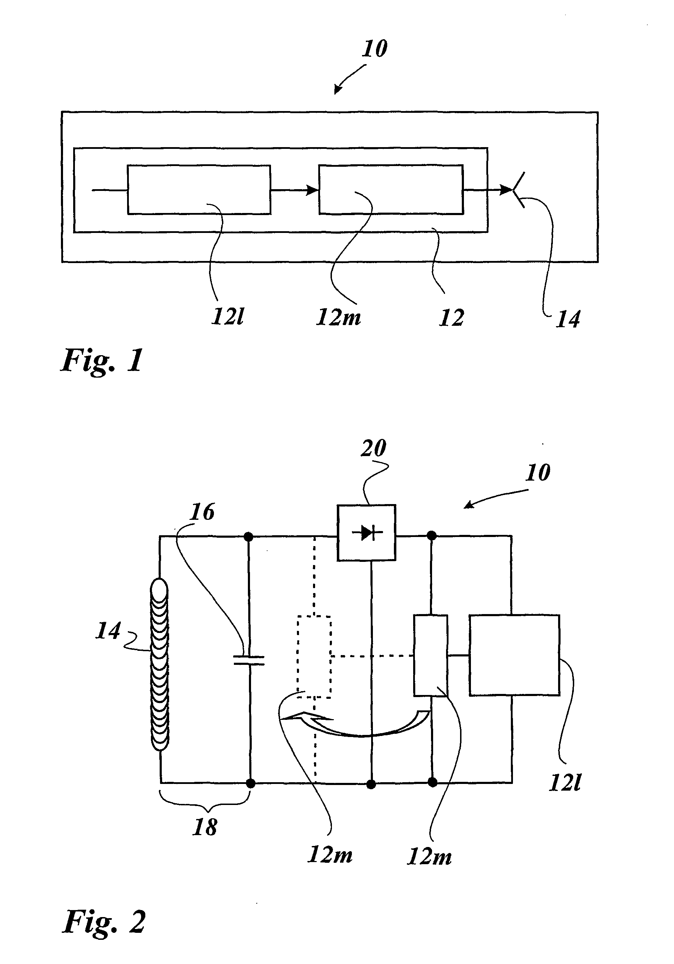

Fig. 1 zeigt einen Transponder 10 umfassend eine Transponderschaltung 12 und eine Antenne 14. Die Transponderschaltung 12 wird im wesentlichen aus einer Logik-Komponente 12I und einer Modulations-Komponente 12m gebildet. Der Transponder 10 ist vorzugsweise als Transponder mit organischen elektronischen Bauelementen, wie beispielsweise OFETs, ausgebildet. Die Modulationskomponente 12m wird im weiteren als Modulator bezeichnet.

Bei dem OFET handelt es sich um einen organischen Feldeffekttransistor mit mindestens drei Elektroden und einer Isolierschicht. Der OFET ist auf einem Trägersubstrat angeordnet, das als Folie ausgebildet sein kann. Ein Substrat aus einem organischen Halbleiter bildet einen leitfähigen Kanal zwischen einer Source-Elektrode und einer Drain-Elektrode. Der leitfähige Kanal ist mit einer Isolationsschicht abgedeckt, auf der eine Gate-Elektrode angeordnet ist. Durch Anlegen einer Gate-Source-Spannung U_{GS} zwischen Gate-Elektrode und Source-Elektrode kann die Leitfähigkeit des leitfähigen Kanals verändert werden. Infolgedessen sinkt der Widerstand zwischen der Drain-Elektrode und der Source-Elektrode nach Anlegen der Gate-Source-Spannung U_{GS} und es kommt zwischen der Source-Elektrode und der Drain-Elektrode ein Stromfluß zustande, wenn eine Drain-Source-Spannung U_{DS} angelegt ist. Es handelt sich bei einem OFET also im wesentlichen um einen steuerbaren Widerstand.

In der Logik-Komponente 12I des in Fig. 1 dargestellten Transponders ist eine binäre Information abgelegt, die bei Aktivierung des Transponders 10 auf die Modulations-Komponente 12m übertragen wird, wodurch die mit der Modulations-Komponente 12m verbundene Antenne 14 ein mit der binären Information moduliertes Signal abstrahlt. Dieses Signal kann in einem Empfänger ausgewertet werden und gibt Auskunft über die Identität des mit dem Transponder 10 verbundenen Objektes. Bei dem Objekt kann es sich beispielsweise um eine Ware oder ein Sicherheitsdokument handeln.

Fig. 2 zeigt nun ein Schaltbild eines Ausführungsbeispiels des Transponders 10. Gleiche Elemente sind mit gleichen Bezugszeichen bezeichnet. Die Antenne 14 bildet zusammen mit einem Kondensator 16 einen elektrischen Schwingkreis 18, der auf eine Trägerfrequenz abgestimmt ist. Der Schwingkreis 18 ist mit dem Eingang eines Gleichrichters 20 verbunden, wodurch am Ausgang des Gleichrichters 20 eine Gleichspannung bereitgestellt ist, wenn im Schwingkreis 18 durch ein von einem externen Sender erzeugtes elektromagnetisches Feld eine elektrische Spannung induziert ist. Die Logik-Komponente 121 und der Modulator 12m sind versorgungsspannungsseitig mit dem Ausgang des Gleichrichters 20 verbunden.

Hierbei ist es auch möglich, anstelle einer einfachen Gleichrichterdiode einen Brückengleichrichter an den Schwingkreis anzukoppeln, und so beide Halbwellen für die Energieversorgung der Logik-Komponente und des Modulators zu verwenden. Weiter ist es auch möglich zwischen Modulator und Logik-Komponente einen mit einer Diode gegen Entladung gegenüber dem Modulator geschützten zusätzlichen Speicher-Kondensator anzuordnen, der eine sichere und konstante Energieversorgung der Logik-Komponente bewirkt.

Weiter ist es möglich, wie in Fig. 2 angedeutet den Modulator 12m nach dem Gleichrichter 20 oder vor dem Gleichrichter 20 (mit Strichlinien dargestellt) anzuordnen.

Der Ausgang der Logik-Komponente ist mit dem Eingang des Modulators 12m verbunden. Auf diese Weise wird die in der Logik-Komponente 121 gespeicherte Information auf den Modulator 12m übertragen.

Bei dem in Fig. 2 dargestellten Ausführungsbeispiel handelt es sich um eine Lastmodulation des Trägersignals, d.h. das hochfrequente Trägersignal ist in seiner Amplitude moduliert.

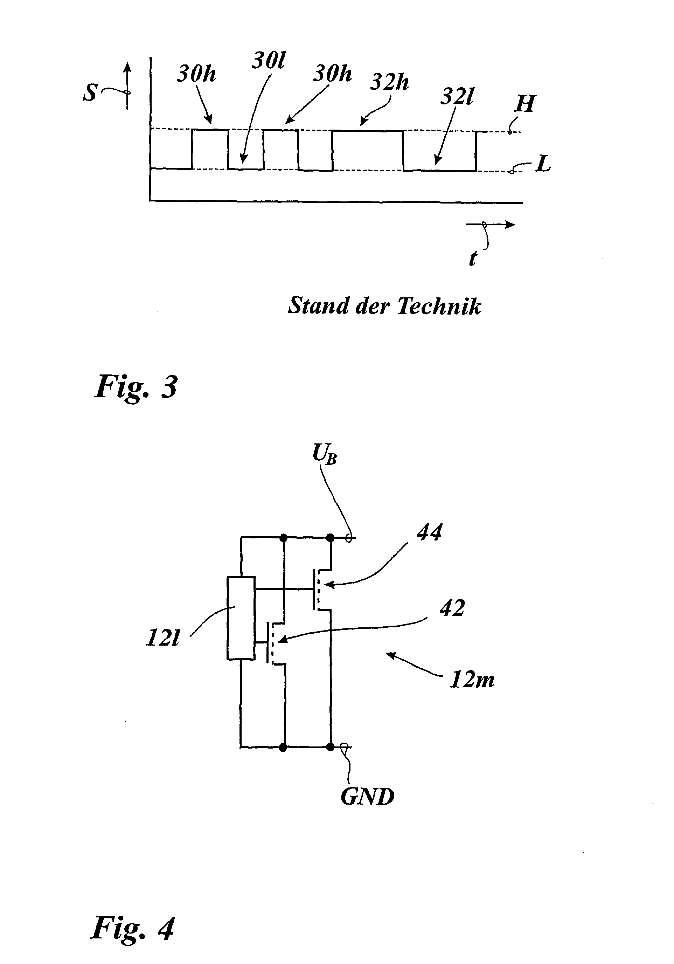

Fig. 3 zeigt nun ein Modulationsdiagramm nach dem Stand der Technik. Der Signalpegel S kann die Werte L für den Low-Pegel und H für den High-Pegel einnehmen, gleichbedeutend mit den Binärsignalen 0 und 1. In Fig. 3 ist die binäre Zeichenfolge 10101100 dargestellt, wobei eine binäre 1 mit 30h, eine binäre 0 mit 30I bezeichnet ist und zwei aufeinanderfolgende binäre 1 mit 32h sowie zwei aufeinanderfolgende 0 mit 32I bezeichnet sind. Auf diese Weise ist für die Übertragung einer binären Zeichenfolge eine der Anzahl der Binärzeichen bzw. Bits entsprechende Zeit benötigt.

Fig. 4 zeigt ein erstes Ausführungsbeispiel eines Modulators 12m, ausgebildet als Parallelschaltung zweier OFET 42 und 44 mit unterschiedlichen Kennlinien.

Die beiden Gates der OFETs 42, 44 sind mit den beiden Ausgängen der Logik-Komponente 12I verbunden. Die beiden Sources der OFETs 42, 44 sind mit einer Masseleitung GND verbunden, die beiden Drains der OFETs 42, 44 sind mit einer Betriebsspannung U_{B} verbunden.

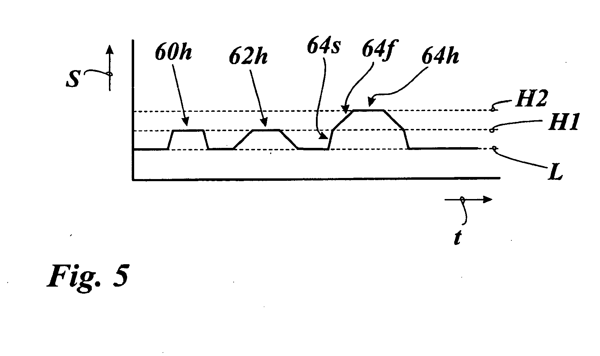

Fig. 5 zeigt nun ein Modulationsdiagramm mit Flankensteilheitsmodulation.

Zur Ausbildung der in Fig. 5 dargestellten Flankensteilheitsmodulation ist vorgesehen, daß die beiden OFET 42 und 44 nach Fig. 4 ein unterschiedliches Schaltverhalten besitzen. Dies kann beispielsweise durch unterschiedlich ausgebildetes Halbleitermaterial oder durch unterschiedliche Kanallängen oder eine unterschiedliche Kanalbreite erreicht sein. Wird der mit geringer Anstiegszeit ausgebildete erste OFET 42 angesteuert, ist ein High-Signal 60h mit steilen Flanken ausgebildet. Wird der mit hoher Anstiegszeit ausgebildete zweite OFET 44 angesteuert, ist ein High-Signal 62h mit flachen Flanken ausgebildet. Bei gleichzeitiger Ansteuerung beider OFET 42, 44 ergibt sich ein High-Signal 64h mit einer ersten steilen Teilflanke 64s und einer zweiten flachen Teilflanke 64f und mit einer Signalamplitude, die als Summe beider Signalamplituden der beiden OFETs 42, 44 ausgebildet ist. Wie in Fig. 5 zu erkennen ist, ist das High-Signal 64h mit doppelter Amplitude ausgebildet, da es ist aus der Überlagerung der High-Signalen 60h und 62h ergibt. Wiederum können mit zwei unterschiedlich ausgebildeten OFET vier Zustände des Trägersignals ausgebildet werden, wobei infolge der gleichzeitigen Ausbildung unterschiedlicher Amplituden und unterschiedlicher Signalflanken das modulierte Trägersignal redundant ist.

Die Demodulation des Signals kann somit auf der mittleren Flankensteilheit, auf der Flankensteilheit im vorderen Bereich der Flanke und/ oder auf dem maximalen oder mittleren Amplitudenwert basieren.

Es können auch hier mehr als zwei parallelen OFETs mit unterschiedlichem Schaltverhalten vorgesehen sein. Wenn n parallel geschaltete OFETs vorgesehen sind, können 2ⁿ verschiedene Signalpegel übertragen werden.

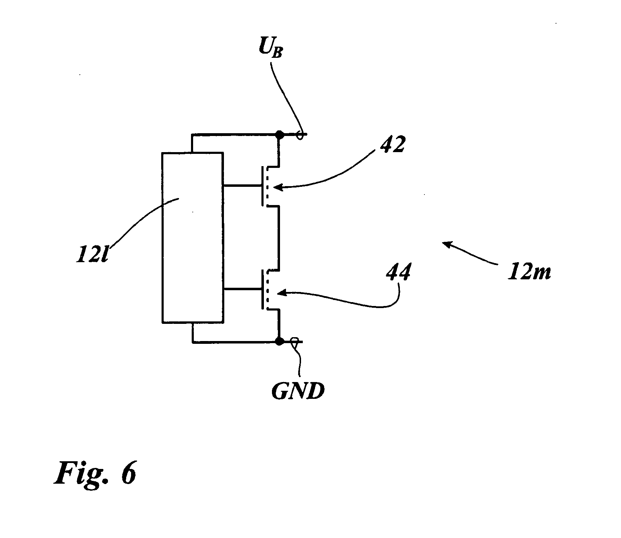

Fig. 6 zeigt ein zweites Ausführungsbeispiel einer Modulatorschaltung. Nunmehr sind die beiden OFET 42, 44 in Reihe geschaltet. Der OFET 42 ist mit dem Drain mit der Betriebsspannung U_{B} verbunden und mit der Source mit dem Drain des OFET 44. Das Source des OFET 44 ist mit der Masseleitung GND verbunden. Die beiden Ausgänge der Logik-Komponente 121 sind mit den beiden Gate der OFET 42, 44 verbunden.

Diese Schaltungsanordnung kann ebenfalls zur Erzeugung der in Fig. 5 dargestellten Signalformen eingesetzt werden, wenn die Sperrwiderstände der OFETs 42 und 44 entsprechend gering gewählt werden. Die in Fig. 4 dargestellte Schaltungsanordnung kann jedoch bevorzugt sein, wenn nur eine geringe Betriebsspannung U_{B} vorgesehen ist.

Es können auch Schaltungsanordnungen vorgesehen sein, die Parallelschaltung und Reihenschaltung miteinander vereinen.

## Patentansprüche

1. Elektronikbauteil mit einer Antenne, einem Kondensator und mit einem Modulator zur Modulation eines Trägersignals, wobei das Elektronikbauteil weiter einen Gleichrichter aufweist und der Modulator mit dem Ausgang des Gleichrichters verbunden ist,
**dadurch gekennzeichnet,**
**daß** der Modulator aus mindestens zwei unterschiedlichen organischen Feldeffekttransistoren (72, 73) gebildet ist, die mit unterschiedlichen Halbleiterschichten und/oder mit unterschiedlichen Geometrien ausgebildet sind, so daß die mindestens zwei unterschiedlichen organischen Feldeffekttransistoren (72, 73) ein unterschiedliches Schaltverhalten aufweisen, und derart in dem Elektronikbauteil verschaltet sind, daß sie eine veränderbare Last zur Lastmodulation des Trägersignals bilden.

2. Elektronikbauteil nach Anspruch 1,
**dadurch gekennzeichnet,**
**dass** die mindestens zwei unterschiedlichen organischen Feldeffekttransistoren (72, 73) unterschiedliche Innenwiderstände im durchgeschalteten und/oder im nicht durchgeschalteten Zustand aufweisen.

3. Elektronikbauteil nach einem der vorhergehenden Ansprüche,
**dadurch gekennzeichnet,**
**daß** die organischen Feldeffekttransistoren (72, 73) in einer Parallelschaltung und/oder Reihenschaltung verschaltet sind.

4. Elektronikbauteil nach einem der vorhergehenden Ansprüche,
**dadurch gekennzeichnet,**
**daß** die mindestens zwei unterschiedlichen organischen Feldeffekttransistoren (72, 73) unterschiedliche Flankenformen bei Änderung des Eingangssignals zeigen, die sich insbesondere in ihrer Flankensteilheit unterscheiden.

5. Elektronikbauteil nach einem der vorhergehenden Ansprüche ,
**dadurch gekennzeichnet,**
**daß** die mindestens zwei unterschiedlichen organischen Feldeffekttransistoren (72, 73) mit unterschiedlicher Kanallänge und/oder unterschiedlicher Kanalbreite ausgebildet sind.

6. Elektronikbauteil nach einem der vorhergehenden Ansprüche ,
**dadurch gekennzeichnet,**
**daß** die mindestens zwei unterschiedlichen organischen Feldeffekttransistoren (72, 73) sich in ihrer Dicke, Dotierung oder Leitfähigkeit unterscheidende Halbleiterschichten aufweisen.

7. Elektronikbauteil nach einem der vorhergehenden Ansprüche,
**dadurch gekennzeichnet,**
**daß** die Gates der organischen Feldeffekttransistoren (72, 73) mit den Ausgängen einer binären Logikschaltung (74) verbunden sind.

8. Elektronikbauteil nach einem der vorhergehenden Ansprüche,
**dadurch gekennzeichnet,**
**daß** die binären Logikschaltung eine organische binären Logikschaltung (74) ist.

9. Elektronikbauteil nach Anspruch 7 oder Anspruch 8,
**dadurch gekennzeichnet,**
**daß** die organischen Feldeffekttransistoren (72, 73) von der binären Logikschaltung (74) zur gleichzeitigen Übertragung von zwei oder mehreren Bits mittels eines mehrstufigen Modulationsverfahren angesteuert sind.

10. Elektronikbauteil nach Anspruch 9,
**dadurch gekennzeichnet,**
**daß** die organischen Feldeffekttransistoren (72, 73) von n unterschiedlichen organischen Feldeffekttransistoren gebildet sind, die von der binären Logikschaltung (74) zur gleichzeitigen Übertragung von 2ⁿ Bit angesteuerten sind.

11. Elektronikbauteil nach Anspruch 10,
**dadurch gekennzeichnet,**
**daß** die n unterschiedlichen organischen Feldeffekttransistoren unterschiedliche Innenwiderstände im durchgeschalteten Zustand aufweisen und die n unterschiedlichen organischen Feldeffekttransistoren in Parallelschaltung verschaltet sind.

12. Elektronikbauteil nach Anspruch 11,
**dadurch gekennzeichnet,**
**daß** die n unterschiedlichen organischen Feldeffekttransistoren unterschiedliche Flankenformen beim Zustandsübergang aufweisen und die in unterschiedlichen organischen Feldeffekttransistoren in Parallelschaltung verschaltet sind.

13. Elektronikbauteil nach einem der vorhergehenden Ansprüche,
**dadurch gekennzeichnet,**
**daß** die Geometrie der organischen Feldeffekttransistoren (72, 73) durch aufgedruckte halbleitende Polymere und/oder leitfähige Druckfarben und/oder metallische Schichten ausgebildet ist.

14. Elektronikbauteil nach einem der vorhergehenden Ansprüche,
**dadurch gekennzeichnet,**
**daß** das Elektronikbauteil von einem mehrschichtigem flexiblen Folienkörper gebildet ist.

15. Sicherheitsdokument, insbesondere Wertpapier, Ausweis, Warenetikett oder Ticket, mit einem Elektronikbauteil nach Anspruch 1.

## Claims

1. Electronic component comprising an antenna, a capacitor and comprising a modulator for modulating a carrier signal, the electronic component furthermore having a rectifier and the modulator being connected to the output of the rectifier,
**characterized**
**in that** the modulator is formed from at least two different organic field effect transistors (72, 73) which are formed with different semiconductor layers and/or with different geometries, such that the at least two different organic field effect transistors (72, 73) have a different switching behavior, and are connected up in the electronic component in such a way that they form a variable load for load modulation of the carrier signal.

2. Electronic component according to Claim 1,
**characterized**
**in that** the at least two different organic field effect transistors (72, 73) have different internal resistances in the turned-on and/or in the turned-off state.

3. Electronic component according to one of the preceding claims,
**characterized**
**in that** the organic field effect transistors (72, 73) are connected up in a parallel connection and/or series connection.

4. Electronic component according to one of the preceding claims,
**characterized**
**in that** the at least two different organic field effect transistors (72, 73) exhibit different edge forms when the input signal changes, which differ in particular in terms of their edge steepness.

5. Electronic component according to one of the preceding claims,
**characterized**
**in that** the at least two different organic field effect transistors (72, 73) are formed with different channel lengths and/or different channel widths.

6. Electronic component according to one of the preceding claims,
**characterized**
**in that** the at least two different organic field effect transistors (72, 73) have semiconductor layers that differ in terms of their thickness, doping or conductivity.

7. Electronic component according to one of the preceding claims,
**characterized**
**in that** the gates of the organic field effect transistors (72, 73) are connected to the outputs of a binary logic circuit (74).

8. Electronic component according to one of the preceding claims,
**characterized**
**in that** the binary logic circuit is an organic binary logic circuit (74).

9. Electronic component according to Claim 7, or Claim 8,
**characterized**
**in that** the organic field effect transistors (72, 73) are driven by the binary logic circuit (74) for the simultaneous transmission of two or more bits by means of a multistage modulation method.

10. Electronic component according to Claim 9,
**characterized**
**in that** the organic field effect transistors (72, 73) are formed by n different organic field effect transistors which are driven by the binary logic circuit (74) for the simultaneous transmission of 2ⁿ bits.

11. Electronic component according to Claim 10,
**characterized**
**in that** the n different organic field effect transistors have different internal resistances in the turned-on state and the n different organic field effect transistors are connected up in parallel connection.

12. Electronic component according to Claim 11,
**characterized**
**in that** the n different organic field effect transistors have different edge forms during the state transition and the n different organic field effect transistors are connected up in parallel connection.

13. Electronic component according to one of the preceding claims,
**characterized**
**in that** the geometry of the organic field effect transistors (72, 73) is formed by printed-on semiconducting polymers and/or conductive printing inks and/or metallic layers.

14. Electronic component according to one of the preceding claims,
**characterized**
**in that** the electronic component is formed by a multilayer flexible film body.

15. Security document, in particular valuable document, identity card, merchandise label or ticket, comprising an electronic component according to Claim 1.

## Revendications

1. Composant électronique doté d'une antenne, d'un condensateur et d'un modulateur servant à la modulation d'un signal de porteuse, le composant électronique comportant par ailleurs un redresseur et le modulateur étant relié à la sortie du redresseur,
**caractérisé en ce que** le modulateur est formé d'au moins deux transistors à effet de champ organiques différents (72, 73) qui sont formés avec différentes couches semi-conductrices et/ou différentes géométries de sorte que les au moins deux transistors à effet de champ organiques différents (72, 73) présentent un comportement de commutation différent et sont montés dans le composant électronique de manière telle qu'ils forment une charge modifiable pour la modulation de charge du signal de porteuse.

2. Composant électronique selon la revendication 1, **caractérisé en ce que** les au moins deux transistors à effet de champ organiques différents (72, 73) présentent des résistances internes différentes dans l'état passant et/ou dans l'état bloqué.

3. Composant électronique selon l'une quelconque des revendications précédentes, **caractérisé en ce que** les transistors à effet de champ organiques (72, 73) sont montés dans un circuit parallèle et/ou dans un circuit série.

4. Composant électronique selon l'une quelconque des revendications précédentes, **caractérisé en ce que**, en cas de changement du signal d'entrée, les au moins deux transistors à effet de champ organiques différents (72, 73) montrent des formes de fronts différentes qui se différencient particulièrement par la pente du front.

5. Composant électronique selon l'une quelconque des revendications précédentes, **caractérisé en ce que** les au moins deux transistors à effet de champ organiques différents (72, 73) sont formés avec une longueur de canal différente et/ou une largeur de canal différente.

6. Composant électronique selon l'une quelconque des revendications précédentes, **caractérisé en ce que** les au moins deux transistors à effet de champ organiques différents (72, 73) comportent des couches semi-conductrices se différenciant dans leur épaisseur, dopage ou conductivité.

7. Composant électronique selon l'une quelconque des revendications précédentes, **caractérisé en ce que** les grilles des transistors à effet de champ organiques (72, 73) sont reliées aux sorties d'un circuit logique binaire (74).

8. Composant électronique selon l'une quelconque des revendications précédentes, **caractérisé en ce que** le circuit binaire logique est un circuit logique binaire organique (74).

9. Composant électronique selon la revendication 7 ou la revendication 8, **caractérisé en ce que** les transistors à effet de champ organiques (72, 73) sont commandés par le circuit logique binaire (74) afin de transmettre simultanément deux ou plusieurs bits au moyen d'un procédé de modulation à plusieurs niveaux.

10. Composant électronique selon la revendication 9, **caractérisé en ce que** les transistors à effet de champ organiques (72, 73) sont formés de n transistors à effet de champ organiques différents qui sont commandés par le circuit logique binaire (74) afin de transmettre simultanément 2n bits.

11. Composant électronique selon la revendication 10, **caractérisé en ce que** les n transistors à effet de champ organiques différents présentent des résistances internes différentes dans l'état passant et **en ce que** les n transistors à effet de champ organiques différents sont montés dans un circuit parallèle.

12. Composant électronique selon la revendication 11, **caractérisé en ce que** les n transistors à effet de champ organiques différents présentent des formes de front différentes lors du changement d'état et **en ce que** les n transistors à effet de champ organiques différents sont montés dans un circuit parallèle.

13. Composant électronique selon l'une quelconque des revendications précédentes, **caractérisé en ce que** la géométrie des transistors à effet de champ organiques (72, 73) est formée par des polymères semiconducteurs imprimés et/ou des encres d'impression conductrices et/ou des couches métalliques.

14. Composant électronique selon l'une quelconque des revendications précédentes, **caractérisé en ce que** le composant électronique est formé par un film flexible composé de plusieurs couches.

15. Document de sécurité, en particulier titre, carte d'identité, étiquette de marchandise ou ticket, équipé d'un composant électronique selon la revendication 1.
